# EUROPEAN PATENT SPECIFICATION

(11) **EP 0 747 189 B1**
(45) Date of publication and mention of the grant of the patent: **27.06.2001**
(21) Application number: 96303995.3
(22) Date of filing: 03.06.1996
(51) Int. Cl.: B29C 33/26, B29D 30/06

(54) **Tyre vulcanising mould**
Reifenvulkanisierform
Moule de vulcanisation de pneumatiques

(30) Priority: 05.06.1995 JP 13814995
(43) Date of publication of application: 11.12.1996
(73) Proprietor: SUMITOMO RUBBER INDUSTRIES LIMITED, Kobe-shi, Hyogo-ken (JP)
(72) Inventor: Shimizu, Keiji, Akashi-shi Hyogo-ken (JP)
(74) Representative: Stewart, Charles Geoffrey

(56) References cited:
- EP-A- 0 071 900
- DE-A- 2 105 338
- DE-A- 2 502 185
- FR-A- 2 306 069
- GB-A- 177 006
- GB-A- 1 176 162

## Description

The present invention relates to a tyre vulcanising mould capable of providing for easy taking out a finished tyre without causing rubber defect or the like, thus enhancing the appearance of the finished tyre, and providing manufacture at low cost. It is particularly suitable for vulcanising solid tyres.

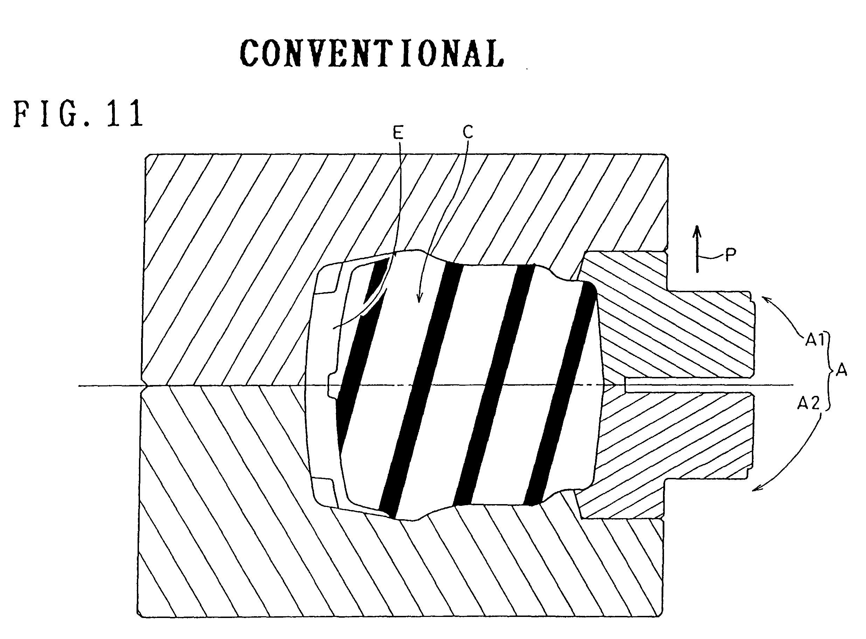

For example, a solid tyre having a same appearance and shape as a pneumatic tyre is preferably used on forklifts or the like. Such a solid tyre is manufactured hitherto, as shown in Fig. 11, by pressing a roughly shaped green tyre into the cavity C of a two piece mould A consisting of upper and lower moulds A1 and A2, and vulcanising the green tyre in the mould A. Then the vulcanised solid tyre is taken out from the cavity C by opening the upper and the lower moulds A1, A2 in the tyre axial direction P.

In the two piece mould A, however, since rib portions E of the mould A, for forming a tyre-tread pattern are buried in the tyre-rubber and drawn out in the tyre in the axial direction when the tyre is taken out, resistance between the tyre and the mould is high and as the result, it is not easy to take out the tyre, and the tyre rubber is likely to be chipped so that the appearance of the finished tyre is spoiled.

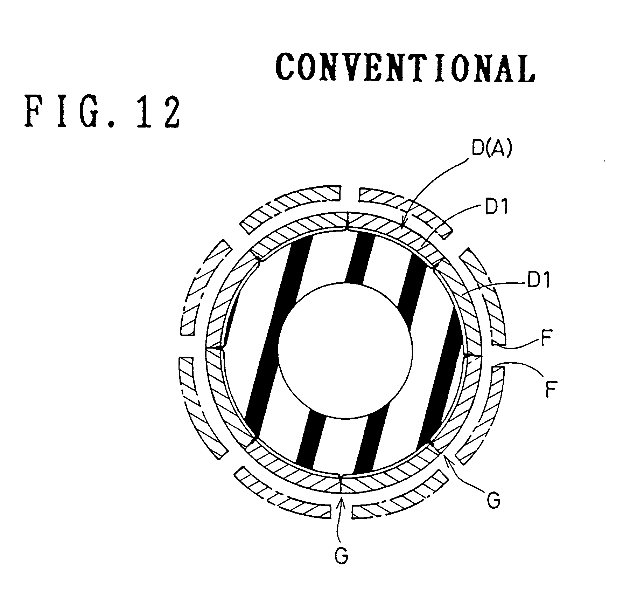

As means for solving such problems, for example, as shown in Fig. 12, it has been proposed to use a ring part D of the mould A to mould the tyre-tread. This is divided into eight or nine tread segments D1 by split surfaces F extending in the tyre radial direction, and the segments Dl are guided in the tyre radial direction so as to expand the ring part D in the diameter. Accordingly, the rib portions are drawn out in the tyre in the radial direction, so the resistance between the finished tyre and the mould A becomes lower.

A tyre mould which is divided into an upper mould and a lower mould in accordance with the preamble of claim 1 in which both upper and lower tread ring parts are expanded in the radial direction as above is known from DE-A-2502185.

However, such a split mould is complicated in the structure of working mechanism for moving the segments D1 in the radial direction, and is a very expensive apparatus. In addition, since the ring part D must be contracted in diameter while pressing the green tyre, much rubber oozes out from the gaps G between the split surfaces F, the appearance of the finished tyre is often spoiled, and the above problems are not solved completely.

It is hence a primary object of the invention to produce a tyre vulcanising mould capable of reducing the resistance between the mould and the finished tyre, preventing rubber defects and other appearance defects, and providing manufacture at low cost with a simple mechanism.

According to one aspect of the present invention, this object is achieved by a tyre vulcanising mould which is divided into an upper mould and a lower mould in the tyre axial direction by a split surface, each of said upper mould and the lower mould comprising a base part having a bead moulding surface for a tyre-bead and a. sidewall moulding surface for a tyre-sidewall, and a tread ring part having a tread moulding surface for a tyre-tread and a buttress moulding surface for a tyre-buttress, wherein said tread ring part is divided into a plurality of tread segments by radial split surfaces extending from the tyre axis in the tyre radial direction, each of said tread segments has a stop surface contacting with the base part at a reference position where the radial split surfaces of the tread ring part contact each other, and is pivotally supported on the base part around a centre line positioned in the tangential direction of a circle centred on the tyre axis so that the tread segments are tiltable between the reference position and a releasing position where the radial split surfaces are separated from each other, and so that a radial distance from the tyre axis to the tread moulding surface at the releasing position is larger than a radial distance from the tyre axis to the tread moulding surface at the reference position.

The tread segments are preferred to be thrust toward the reference position by spring means.

Moreover, the tread segments are preferred to have a stop surface contacting with the base part at the releasing position, and a minimum radial distance from the tyre axis to the buttress moulding surface at the releasing position is preferred to be smaller than a radial distance from the tyre axis to a radially outer surface of a green tyre.

An embodiment of the present invention will now be described, by way of example only, referring to the attached diagrammatic drawings, in which:
Fig. 1 is a side view showing an example in the working condition of an embodiment of the invention;
Fig. 2 is a sectional view showing an embodiment of the invention;
Fig. 3 is plan view along line I-I of Fig. 1 showing an upper mould without a clip ring;
Fig. 4 is a schematic perspective view showing the movement of the tread segments;
Fig. 5 is a partial side view taken in the direction of the arrow II of Fig. 2 showing an example of tread segments;
Fig. 6 is a partial plan view showing an example of a pivoting portion of the tread segment with a base part;
Fig. 7 is a partial plan view showing other embodiment of the pivoting portion of the tread segment;
Fig. 8 is a sectional view showing the operation of the invention;
Fig. 9 is a sectional view showing the operation of the invention;
Fig. 10 is a sectional view showing other embodiment of the invention;
Fig. 11 is a sectional view for explaining a conventional vulcanising mould; and
Fig. 12 is a sectional view for explaining other conventional vulcanising moulds.

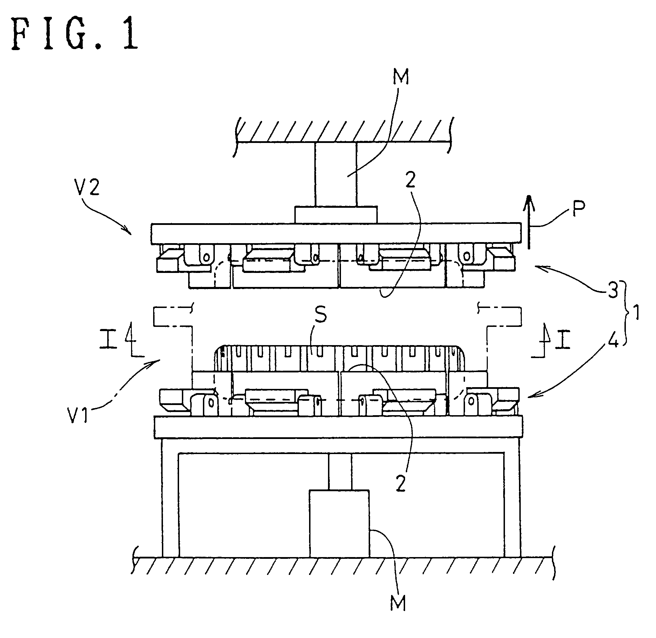

A tyre vulcanising mould 1 comprises, as shown in Fig. 1, an upper mould 3 and a lower mould 4 mounted and supported relatively to each other with a split surface 2 in the tyre axial direction P. In the contacting position V1 the split surfaces 2, 2 contact each other so as to form close a space or cavity 15 for moulding a solid tyre S. In the separate state V2 the split surfaces 2, 2 are apart so as to open the space 15. In this embodiment, the split surfaces 2 are positioned approximately on the tyre equator.

Either one or both of the moulds 3 and 4 are mounted on a lift M so as to allow contact with or separation from each other.

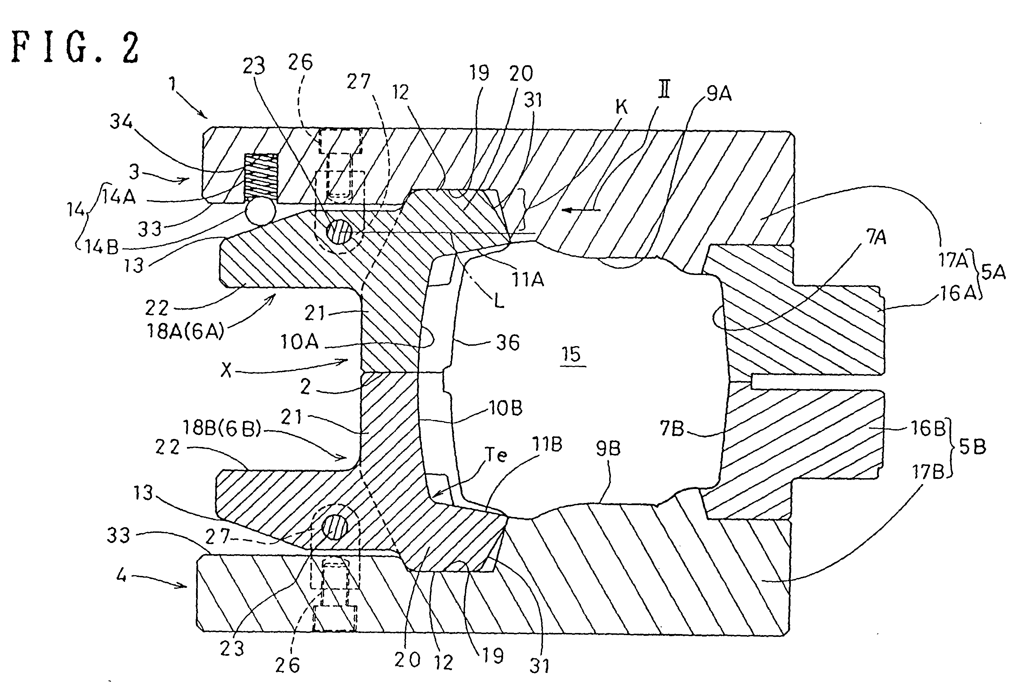

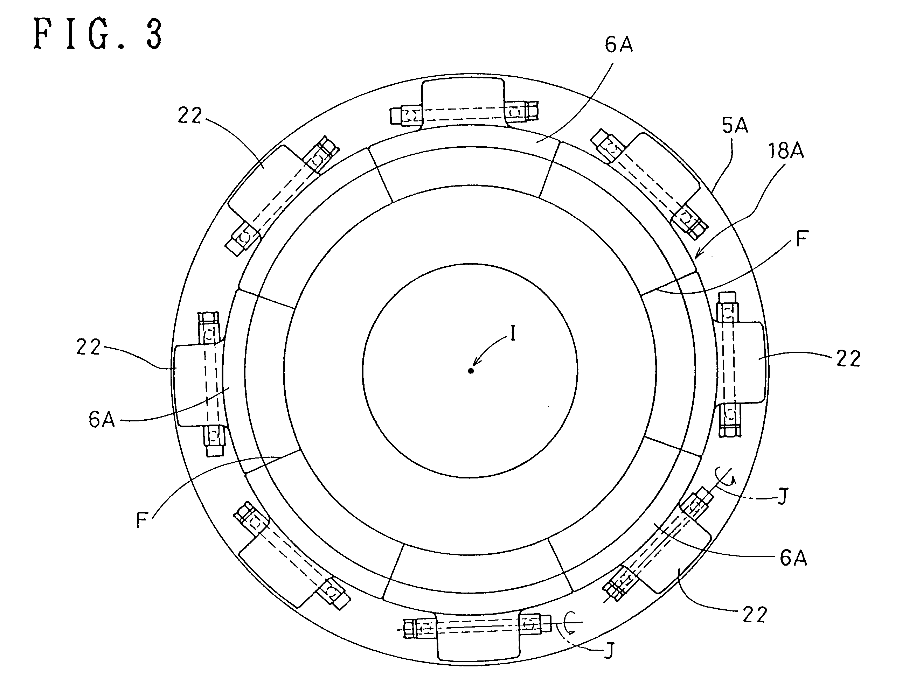

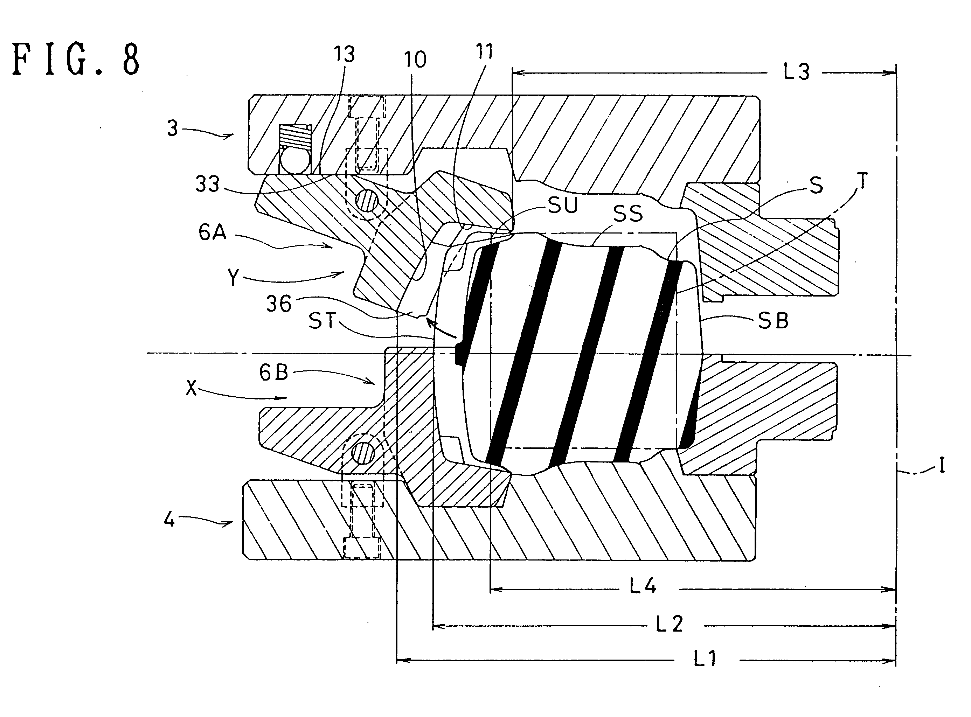

The upper mould 3 has, as shown in Figs. 2 and 3, a base part 5A and a tread ring part 18A. The base part 5A comprises a clip ring 16A having a bead moulding surface 7A for an upper tyre-bead SB (shown in Fig. 8), and a main body 17A having a sidewall moulding surface 9A for an upper tyre-sidewall SS. The tread ring part 18A has a tread moulding surface 10A for an upper portion of a tyre-tread ST and a buttress moulding surface 11A for an upper side of a tyre-buttress SU, and is divided by radial split surfaces F extending from the tyre axis I in the tyre radial direction into a plurality of, eight in this embodiment, tread segments 6A.

The lower mould 4 is approximately the same in structure as the upper mould 3, and has a base part 5B comprising a clip ring 16B with a bead moulding surface 7B and a main body 17B with a sidewall moulding surface 9B, and a tread ring part 18B with a tread moulding surface 10B and a buttress moulding surface 11B. The tread ring part 18B is, also, divided into a plurality of tread segments 6B by the radial split surfaces F.

The tread moulding surfaces 10A, 10B are provided with rib portions 36 for forming a tyre tread pattern of grooves.

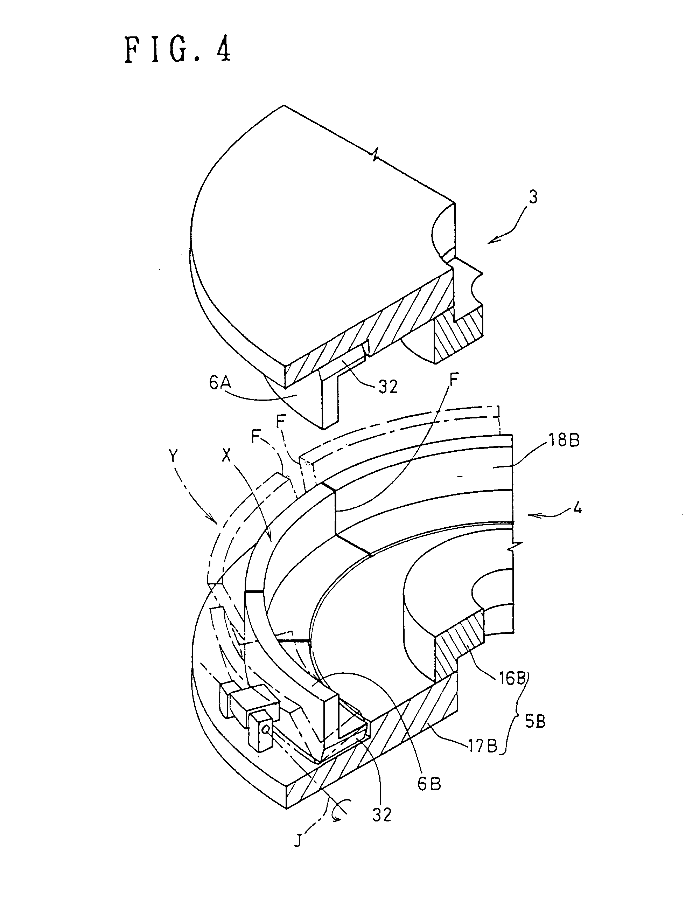

The tread segments 6A, 6B comprise a side portion 20 with a buttress moulding surface 11A or 11B, a top portion 21 with a tread moulding surface 10A or 10B, and a projecting or bulge portion 22 projecting from the top portion 21 in the tyre radial direction, respectively. Each bulge portion 22 is, as shown in Figs. 3 and 4, pivotally supported on the base parts 5A, 5B around a centre line J positioned in the tangential direction of a circle centred on the tyre axis I, so that the tread segments 6A and 6B are tiltable between a reference or closed position X where the radial split surfaces F adjacent in the circumferential direction contact each other and an open or releasing position Y where the radial split surfaces F are apart.

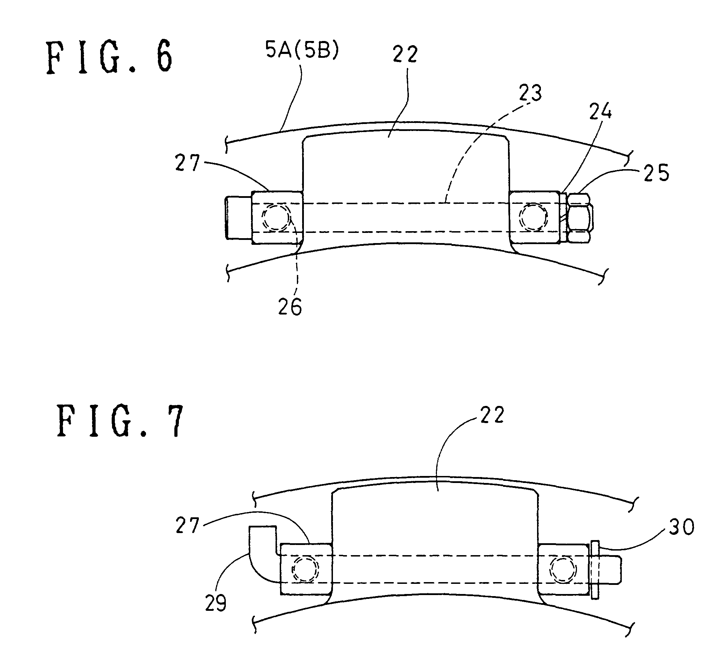

The bulge portion 22 is, as shown in Fig. 6, in this embodiment, fitted to the base parts 5A, 5B by a shaft 23 made of bolts which is fixed into bearings 27 with a spring washer 24 and a nut 25. The bearings 27 are fixed by a retained bolt 26 in the base parts 5A, 5B.

For the fixing means of the tread segments 6A, 6B, as shown in Fig. 7, an iron bar 29 bent at one end is driven through the bulge portion 22 and fitted to the bearing 27 by a pin 30 or the like.

In the tread segments 6A, 6B, the centre line J is positioned such that the radial distance L1 from the tyre axis I to the tread moulding surface 10 at the releasing position Y becomes larger than the radial distance L2 at the reference position X as shown in Fig. 8. In this embodiment, the centre line J is positioned outwardly in the tyre axial direction from an axially outer tread edge Te as shown in Fig. 2.

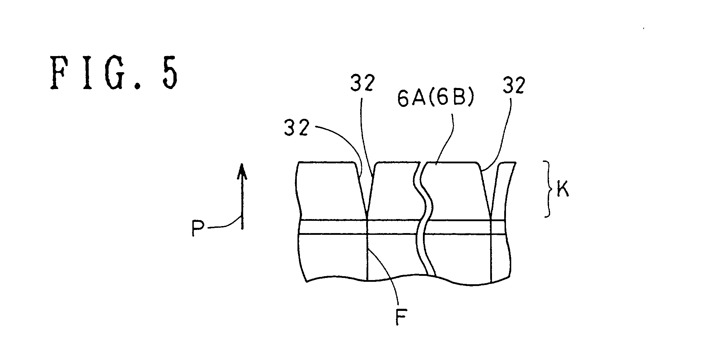

The side portion 20 is provided with a stop surface 12 contacting a recess 19 of the base parts 5A, 5B at the reference position X, thereby setting the tread segments 6A, 6B at proper positions (reference position X). The side portion 20 is, also provided with a customary slanted region 31 so as not to interfere with the base parts 5A, 5B when moving toward the releasing position Y. In addition, as shown in Figs 2, 4 and 5, the radial split surface F is provided with a customary slanted region 32 at an outside area K in the tyre axial direction from a horizontal plane L passing through the centre line J so that the tread segments adjacent in the circumferential direction do not interfere with each other when tilting toward the releasing position Y.

The bulge portion 22 is provided with a stop surface 13 contacting a horizontal plane 33 of the base parts 5A, 5B at the releasing position Y, and a radial distance L3 from the tyre axis I to a radially inner end of the buttress moulding surface 11 at the releasing position Y is set smaller than a radial distance L4 from the tyre axis I to an outer surface of a green tyre T as shown in Fig. 8. Thereby, the processing degree for the green tyre is optimised, and the product quality is improved.

Each tread segment 6A is thrust toward the reference position X by spring means 14 mounted on the base part 5A. In this embodiment, the spring means 14 comprise a coil spring 14A disposed in a recess 34 of the base body 5A and a sphere 14B fitted to the front end of the spring 14A to cope with the change of angle of the stop surface 13.

The operation of the mould is described below.

After inserting the green tyre T into the open space 15 of the mould 1 which is in the open or separate state V2, the upper mould 3 is lowered to press and squeeze the green tyre T, thereby vulcanising and forming into a finished tyre S.

Then, as shown in Fig. 8, the upper mould 3 is lifted in order to take out the tyre S. Along with the lifting of the upper mould 3, the tread segments 6A tilt automatically from the reference position X to the releasing position Y by the moment arising from the friction between each rib portion 36 and the tyre rubber, thereby drawing out the rib portions 36 from the tyre rubber approximately in the tyre radial direction.

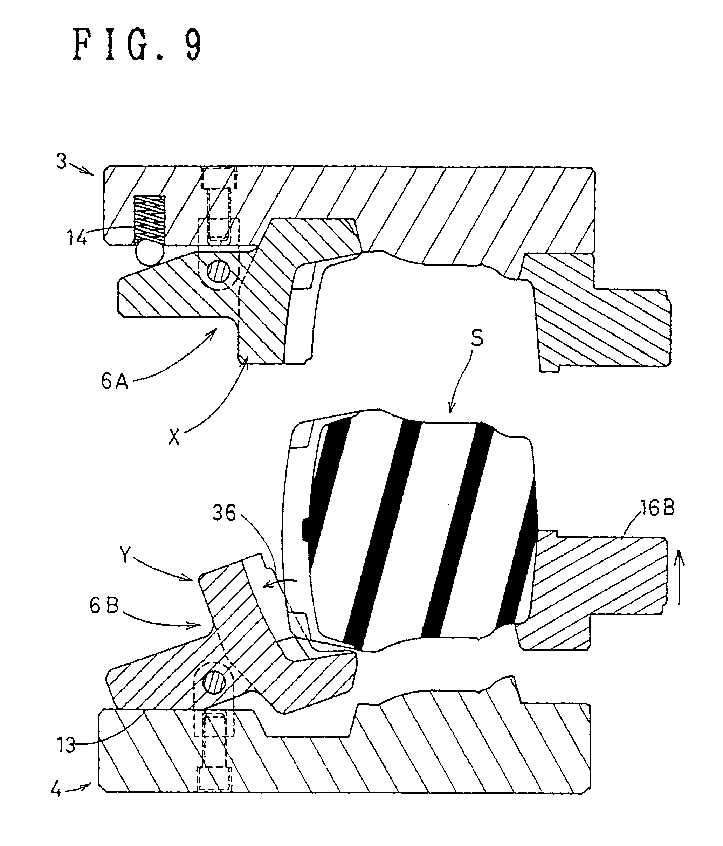

When the tread segments 6A are dislocated from the finished tyre S, as shown in Fig. 9, the tread segments 6A are restored to the reference position X again by the spring means 14.

In consequence of lifting the tyre S by the clip ring 16B, the tread segments 6B start tilting from the reference position X to the releasing position Y in the same way as the tread segments 6A, thereby drawing out the rib portions 36 from the tyre rubber approximately in the tyre radial direction.

Accordingly, the resistance between the mould 1 and the finished tyre S is reduced, so that the finished tyre S may be easily taken out of the mould 1 without chipping. In addition, since the rib portions 36 is drawn out approximately in the tyre radial direction, it is possible to form a tread pattern including circumferential grooves.

When the finished tyre S is dislocated from the tread segments 6B, the tread segments 6B return to the reference position X by gravity. As described above, since the upper and lower tread segments 6A, 6B are restored to the reference position X again, the gaps between the tread segments adjacent in the circumferential direction are closed before the next green tyre T is begun to be pressed by the moulds 3, 4. Therefore, the ooze of rubber from the gaps arising in the conventional split mould introduced in Fig. 12 is prevented. Moreover, since the complicated mechanism for such prior known split moulds is not required, it is possible to manufacture easily, the cost of the mould is lower, the working mechanism is simplified, and the controllability is enhanced.

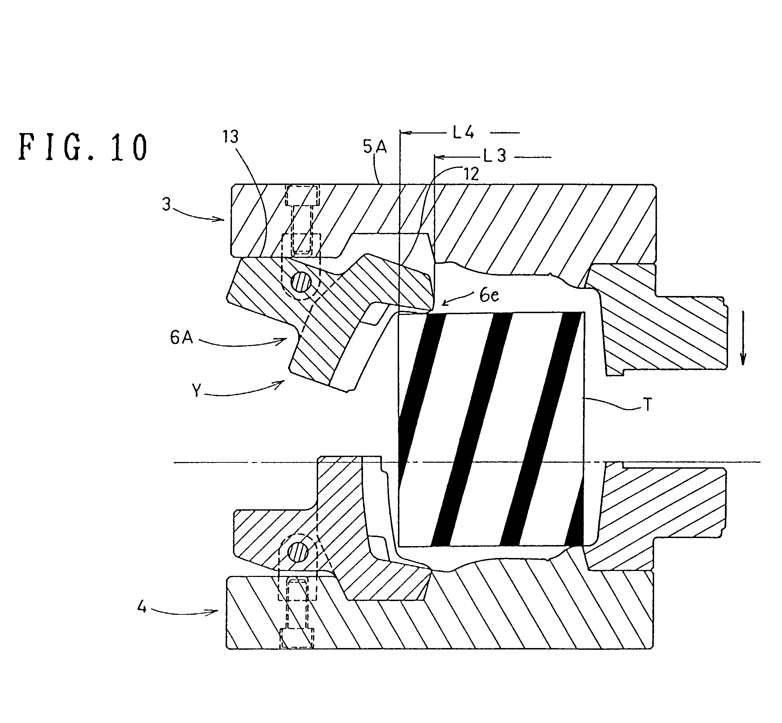

Fig. 10 shows another embodiment of the invention without the spring means 14.

In this embodiment, as the tread segments 6A descend, radially inner ends 6e of the segments 6A is pushed up by a side of the green tyre T until the stop surface 12 abuts against the base part 5A so as to close the gaps between the tread segments. Therefore, ooze of rubber from the gaps is prevented too. At this time, the angle of the stop surface 13 of the tread segment 6A must be set such that the radial distance L3 from the tyre axis I to a radially inner end 6e of the buttress moulding surface 11 at the releasing position Y is smaller than a radial distance L4 from the tyre axis I to the outer surface of a green tyre T.

The mould 1 of the invention may be used not only for the solid tyres but also for ordinary pneumatic tyres. Also the mould 1 may be also fabricated with the split surfaces 2 deviated from the tyre equator. By deviating the split surfaces 2 upwardly, retention of the vulcanised finished tyre S to the upper mould 3 can be lessened.

## Claims

1. A tyre vulcanising mould (1) which is divided into an upper mould (3) and a lower mould (4) in the tyre axial direction by a split surface (2), each of said upper mould (3) and the lower mould (4) comprising a base part (5A,5B) having a bead moulding surface (7A,7B) for a tyre-bead (SB) and a sidewall moulding surface (9A, 9B) for a tyre-sidewall (SS), and a tread ring part (18A, 18B) having a tread moulding surface (10A, 10B) for a tyre-tread ST and a buttress moulding surface (11A, 11B) for a tyre-buttress (SU), characterised in that each of said tread ring part (18A,18B) is divided into a plurality of tread segments (6A,6B) by radial split surfaces (F) extending from the tyre axis (I) in the tyre radial direction, each of said tread segments (6A, 6B) has a stop surface (12) contacting with the base part (5A,5B) at a reference position X where the radial split surfaces (F) of the tread ring part (18A,18B) contact each other, and is pivotally supported on the base part (5A,5B) around a centre line (J) positioned in the tangential direction of a circle centred on the tyre axis (I) so that the tread segments (6A,6B) are tiltable between the reference position (X) and a releasing position (Y) where the radial split surfaces (F) are separated from each other, and so that a radial distance (L1) from the tyre axis (I) to the tread moulding surface (10A, 10B) at the releasing position (Y) is larger than a radial distance (L2) from the tyre axis (I) to the tread moulding surface (10A, 10B) at the reference position (X).

2. A tyre vulcanising mould (1) of claim 1, characterised in that each of said tread segments (6A) provided in the upper mould (3) is thrust toward the reference position (X) by spring means (14).

3. A tyre vulcanising mould (1) of claim 1 or 2, characterised in that each of said tread segments (6A, 6B) has a stop surface (13) contacting with the base part (5A,5B) at the releasing position (Y), and a radial distance (L3) from the tyre axis (I) to the buttress moulding surface (11A, 11B) at the releasing position (Y) is smaller than a radial distance (L4) from the tyre axis (I) to a radially outer surface of a green tyre (T).

## Patentansprüche

1. Reifenvulkanisierform (1), die durch eine Teilfläche (2) in eine obere Form (3) und eine untere Form (4) in der axialen Richtung des Reifens geteilt ist, wobei sowohl die obere Form (3) als auch die untere Form (4) ein Basisteil (5A, 5B) mit einer Wulstformungsfläche (7A, 7B) für einen Reifenwulst (SB) und einer Seitenwandformungsfläche (9A, 9B) für eine Reifenseitenwand (SS) und ein Laufstreifenringteil (18A, 18B) mit einer Laufstreifenformungsfläche (10A, 10B) für einen Reifenlaufstreifen ST und einer Schulterzonenformungsfläche (11A, 11B) für eine Reifenschulterzone (SU) aufweisen, dadurch gekennzeichnet, daß jedes Laufstreifenringteil (18A, 18B) durch sich von der Reifenachse (I) in der Radialrichtung des Reifens erstrekkende, radiale Teilflächen (F) in mehrere Laufstreifensegmente (6A, 6B) geteilt ist, wobei jedes der Laufstreifensegmente (6A, 6B) eine Anschlagfläche (12) aufweist, die in einer Bezugsstellung X, in der sich die radialen Teilflächen (F) des Laufstreifenringteils (18A, 18B) berühren, mit dem Basisteil (5A, 5B) in Berührung kommt, und auf dem Basisteil (5A, 5B) um eine Mittellinie (J), die in der tangentialen Richtung eines auf der Reifenachse (I) zentrierten Kreises angeordnet ist, schwenkbar unterstützt ist, so daß die Laufstreifensegmente (6A, 6B) zwischen der Bezugsstellung (X) und einer Freigabestellung (Y), in der die radialen Teilflächen (F) voneinander getrennt sind, kippbar sind, und so daß ein radialer Abstand (L1) von der Reifenachse (I) zur Laufstreifenformungsfläche (10A, 10B) in der Freigabestellung (Y) größer als ein radialer Abstand (L2) von der Reifenachse (I) zur Laufstreifenformungsfläche (10A, 10B) in der Bezugsstellung (X) ist.

2. Reifenvulkanisierform (1) nach Anspruch 1, dadurch gekennzeichnet, daß jedes der in der oberen Form (3) vorgesehenen Laufstreifensegmente (6A) durch ein Federmittel (14) in Richtung der Bezugsstellung (X) geschoben wird.

3. Reifenvulkanisierform (1) nach Anspruch 1 oder 2, dadurch gekennzeichnet, daß jedes der Laufstreifensegmente (6A, 6B) eine Anschlagfläche (13) aufweist, die in der Freigabestellung (Y) mit dem Basisteil (5A, 5B) in Berührung kommt, und ein radialer Abstand (L3) von der Reifenachse (I) zur Schulterzonenformungsfläche (11A, 11B) in der Freigabestellung (Y) kleiner als ein radialer Abstand (L4) von der Reifenachse (I) zu einer radial äußeren Fläche eines Rohreifens (T) ist.

## Revendications

1. Moule (1) de vulcanisation de pneumatique, qui est divisé en un moule supérieur (3) et un moule inférieur (4) dans la direction axiale du pneumatique par une surface de séparation (2), chacun des moules supérieur (3) et inférieur (4) comprenant une partie de base (5A, 5B) ayant une surface de moulage de talon (7A, 7B) destinée à un talon (SB) de pneumatique et une surface de moulage de paroi latérale (9A, 9B) destinée à une paroi latérale (SS) du pneumatique, et une partie d'anneau de bande de roulement (18A, 18B) ayant une surface de moulage de bande de roulement (10A, 10B) destinée à une bande de roulement (ST) de pneumatique, et une surface de moulage de contrefort (11A, 11B) destinée à une surface de contrefort du pneumatique (SU), caractérisé en ce que chaque partie d'anneau de bande de roulement (18A, 18B) est divisée en plusieurs segments (6A, 6B) de bande de roulement par des surfaces de séparation radiale (F) s'étendant depuis l'axe (I) du pneumatique dans la direction radiale du pneumatique, chacun des segments (6A, 6B) de bande de roulement possède une surface d'arrêt (12) qui est au contact de la partie de base (5A, 5B) à une position de référence X dans laquelle les surfaces de séparation radiale (F) de la partie d'anneau de bande de roulement (18A, 18B) sont en contact, et est supporté de manière pivotante sur la partie de base (5A, 5B) autour d'un axe central (J) positionné dans la direction de la tangente à un cercle centré sur l'axe (I) du pneumatique, si bien que les segments (6A, 6B) de bande de roulement peuvent pivoter entre la position de référence (X) et une position de libération (Y) dans laquelle les surfaces de séparation radiale (F) sont séparées l'une de l'autre, et sont tels que la distance radiale (L1) comprise entre l'axe (I) du pneumatique et la surface de moulage de bande de roulement (10A, 10B) dans la position de libération (Y) est supérieure à la distance radiale (L2) comprise entre l'axe (I) du pneumatique et la surface de moulage de bande de roulement (10A, 10B) dans la position de référence (X).

2. Moule (1) de vulcanisation de pneumatique selon la revendication 1, caractérisé en ce que chacun des segments (6A) de bande de roulement placés dans le moule supérieur (3) est poussé vers la position de référence (X) par un dispositif à ressort (14).

3. Moule (1) de vulcanisation de pneumatique selon la revendication 1 ou 2, caractérisé en ce que chacun des segments (6A, 6B) de bande de roulement possède une surface d'arrêt (13) qui est au contact de la partie de base (5A, 5B) dans la position de libération (Y), et la distance radiale (L3) comprise entre l'axe (I) du pneumatique et la surface de moulage de contrefort (11A, 11B) en position de libération (Y) est inférieure à la distance radiale (L4) comprise entre l'axe (I) du pneumatique et une surface radialement externe d'un pneumatique non vulcanisé (T).
